# EUROPÄISCHE PATENTSCHRIFT

(11) **EP 0 886 358 B1**
(45) Veröffentlichungstag und Bekanntmachung des Hinweises auf die Patenterteilung: **07.05.2003**
(21) Anmeldenummer: 98111013.3
(22) Anmeldetag: 16.06.1998
(51) Int. Cl.: H02G 3/04, C09J 7/04, H01B 3/50

(54) **Schutzummantelung für Kabel, Litzen, Kabelbäume und dergleichen**
Protective sleeve for cables, strands, cable harnesses and the like
Gaine de protection pour câbles, fils, faisceaux de câbles et similaires

(30) Priorität: 18.06.1997 DE 29710583 U
(43) Veröffentlichungstag der Anmeldung: 23.12.1998
(73) Patentinhaber: Mohr, Karl Eugen, 67466 Lambrecht (DE)
(72) Erfinder: Mohr, Karl Eugen, 67466 Lambrecht (DE)
(74) Vertreter: Patentanwälte Möll und Bitterich

(56) Entgegenhaltungen:
- EP-A- 0 173 541
- DE-U- 29 510 907
- DE-U- 29 711 387

## Beschreibung

Die Erfindung betrifft Schutzummantelungen für Kabel, Leitungen, Litzen, Hüllrohre und dergleichen langgestreckte, bewegliche Gegenstände, insbesondere für Kabelbäume, die in rotierenden bzw. vibrierenden Maschinen, Anlagen oder Fahrzeugen verlegt werden sollen, gemäß dem Oberbegriff des Anspruchs 1.

Sind in rotierenden bzw. vibrierenden Maschinen, Anlagen oder Fahrzeugen langgestreckte Gegenstände wie Elektrokabel, Litzen, Leitungen, Hüllrohre von Bowdenzügen oder auch Kabelbäume verlegt, so werden diese in Schwingungen versetzt. Dadurch werden unerwünschte Geräusche erzeugt. Außerdem können Beschädigungen auftreten, beispielsweise durch scharfe Blechkanten. Aus diesem Grunde werden zusätzliche Schutzummantelungen angebracht.

Eine derartige Schutzummantelung ist bekannt aus der DE-U 295 10 907. Diese besteht aus einer glatten Außenbahn, auf die ein Schaumstoffstreifen so aufgeklebt ist, daß die Außenbahn entlang der einen Längskante einen Überschlag bildet. Die Innenseite dieses Überschlags ist mit einem selbstklebenden Material belegt, ebenso die freie Oberfläche des Schaumstoffstreifens. Dadurch steht die ganze Innenfläche zur Fixierung der Schutzummantelung auf den zu schützenden Gegenständen zur Verfügung. Durch diese Materialkombination konnten hohe Abriebfestigkeit, gute Geräuschdämpfung, gute Verarbeitbarkeit und leichte Verlegbarkeit günstig miteinander kombiniert werden.

Bei der praktischen Anwendung dieser Schutzummantelung hat sich jedoch herausgestellt, daß die Handhabung beim Aufbringen auf die zu schützenden Gegenstände noch verbessert werden kann. Insbesondere hat sich herausgestellt, daß das Abziehen der Schutzpapiere von den selbstklebenden Klebstreifen relativ zeitaufwendig ist, weil es oft nicht gleich gelingt, das Papier vom Klebstreifen zu trennen.

Der vorliegenden Erfindung liegt daher die Aufgabe zugrunde, Schutzummantelungen der gattungsgemäßen Art im Hinblick auf eine schnelle Montage weiterzuentwickeln.

Diese Aufgabe wird gelöst durch eine Schutzummantelung mit den Merkmalen des Anspruchs 1.

Die erfindungsgemäße Schutzummantelung besitzt nur noch einen selbstklebenden Klebstreifen, dessen Schutzpapier abgezogen werden muß. Dieser eine Klebstreifen ist erhalten geblieben, weil es sich als sehr vorteilhaft herausgestellt hat, wenn die Schutzummantelung zu Beginn der Montage an dem zu schützenden Gegenstand festgeklebt werden kann. Auch kann die Schutzummantelung beim Verlegen der ummantelten Gegenstände, z. B. beim Durchziehen durch Löcher, Rohre oder Kanäle, nicht mehr verrutschen. Dank des Klettverschlusses, bestehend aus einem Hakenbahnd und einem geeigneten Gegenstück, z. B. einem Flauschband, läßt sich die Schutzummantelung sehr schnell schließen. Klettverschlüsse sind flexibel und dauerhaft. Sie können jederzeit wieder geöffnet und geschlossen werden.

Zwar ist ein Klettverschluß aus Hakenband und gegebenenfalls Flauschband teurer als ein oder zwei selbstklebende Klebstreifen; es hat sich jedoch herausgestellt, daß die Montage viel schneller vonstatten geht, so daß die Materialmehrkosten durch die Lohnkostenersparnis deutlich überkompensiert werden.

Der wesentliche Vorteil ist jedoch, daß der Klettverschluß, anders als ein Klebverschluß nach dem Stand der Technik, weder durch Alter noch durch Wärme aufgeht. Mit der erfindungsgemäßen Schutzummantelung ausgerüstete Kabelbäume können daher beispielsweise auch im Motorraum von Kraftfahrzeugen verlegt werden.

Gemäß einer ersten Variante der Erfindung ist der Verschlußstreifen ein Flauschband und die Außenschicht umfaßt ein Hakenband. Bei dieser Variante befinden sich nach dem Anbringen der Schutzummantelung an dem langgestreckten Gegenstand die Haken des Hakenbandes an der Außenseite der Schutzummantelung. Dadurch ist es möglich, den ummantelten Gegenstand an Abschnitten von Flauschband zu fixieren, die in den Maschinen, Anlagen oder Fahrzeugen angebracht wurden.

Je nach Bedarf gibt es zwei alternative Möglichkeiten der Realisierung.

Gemäß der ersten Alternative umfaßt die Außenschicht eine abriebfeste Vliesschicht, insbesondere ein Spinnfaservlies, und darauf einen innenliegenden Verschlußstreifen in Form des Hakenbandes. Hierbei erhält man an der Außenseite der geschlossenen Schutzummantelung eine Glattfläche.

Gemäß der zweiten Alternative ist die gesamte Außenschicht als Hakenband ausgebildet. Hierbei ist die gesamte Außenseite der geschlossenen Schutzummantelung mit Haken bestückt. Diese Haken besitzen eine gewisse Elastizität, die die gewünschte Schwingungs- und Geräuschdämpfung erhöht, sowie eine gewisse Abriebfestigkeit.

Gemäß einer zweiten Variante der Erfindung ist der Verschlußstreifen ein Hakenband und die Außenschicht umfaßt ein Flauschband. Bei dieser Ausführungsform ist die Außenseite der fertiggestellten Schutzummantelung glatt.

Auch hier bestehen zwei Alternativen der Realisierung.

Gemäß der ersten Alternative umfaßt die Außenschicht eine abriebfeste Vliesschicht, insbesondere ein Spinnfaservlies, und einen Verschlußstreifen in Form des Flauschbandes. Dies führt dazu, daß die Außenseite der fertiggestellten Schutzummantelung durch die abriebfeste Vliesschicht gebildet wird.

Die Breite des Flauschbandes kann bis zur dreifachen Breite des Hakenverschlußbandes betragen und umgekehrt. Dadurch können Toleranzen leicht aufgefangen werden.

Gemäß der zweiten Alternative ist die gesamte Außenschicht als Flauschband ausgebildet.

Gemäß einer vorteilhaften Weiterbildung befindet sich zwischen Schaumstoffschicht und Vliesschicht eine Kaschierschicht. Die Notwendigkeit einer Kaschierschicht besteht immer dann, wenn sich Schaumstoffschicht und Vliesschicht nicht direkt miteinander verbinden lassen.

Die Schaumstoffschicht ihrerseits besteht bevorzugt aus PUR-Weichschaum, aus PE-Schaum oder einem Zellkautschuk.

Gemäß einer Weiterbildung der Erfindung kann die Außenschicht zusätzlich zu dem Vlies auch ein Gewirke umfassen. Gewirke sind aufgrund ihrer Herstellung flexibler und dehnfähiger als Vliese. Vliese dagegen sind glatter und neigen weniger zum Verhaken.

Vorteilhafterweise bestehen Gewirke bzw. Vlies und/oder Flauschband wenigstens teilweise aus Polyester bzw. Polyamid. Polyester bzw. Polyamid hat sich für die erfindungsgemäße Art von Schutzumhüllungen besonders bewährt.

Für besondere Anwendungen, beispielsweise im Kofferraum von Kraftfahrzeugen, kann es sich empfehlen, Gewirke bzw. Vlies und/oder Flauschband wenigstens teilweise aus temperaturbeständigen textilen oder textilartigen Fasern herzustellen, insbesondere Glasfasern, Keramikfasern oder Aramidfasem.

Anhand der Zeichnung soll die Erfindung in Form von Ausführungsbeispielen näher erläutert werden. Es zeigen jeweils in perspektivischer, schematischer Darstellung
- Fig. 1: eine erste Materialbahn zur Herstellung einer Schutzummantelung,
- Fig. 2: eine daraus hergestellte Schutzummantelung,
- Fig. 3: eine zweite Materialbahn zur Herstellung einer Schutzummantelung,
- Fig. 4: eine daraus hergestellte Schutzummantelung,
- Fig. 5: eine dritte Materialbahn zur Herstellung einer Schutzummantelung und
- Fig. 6: eine daraus hergestellte Schutzummantelung.

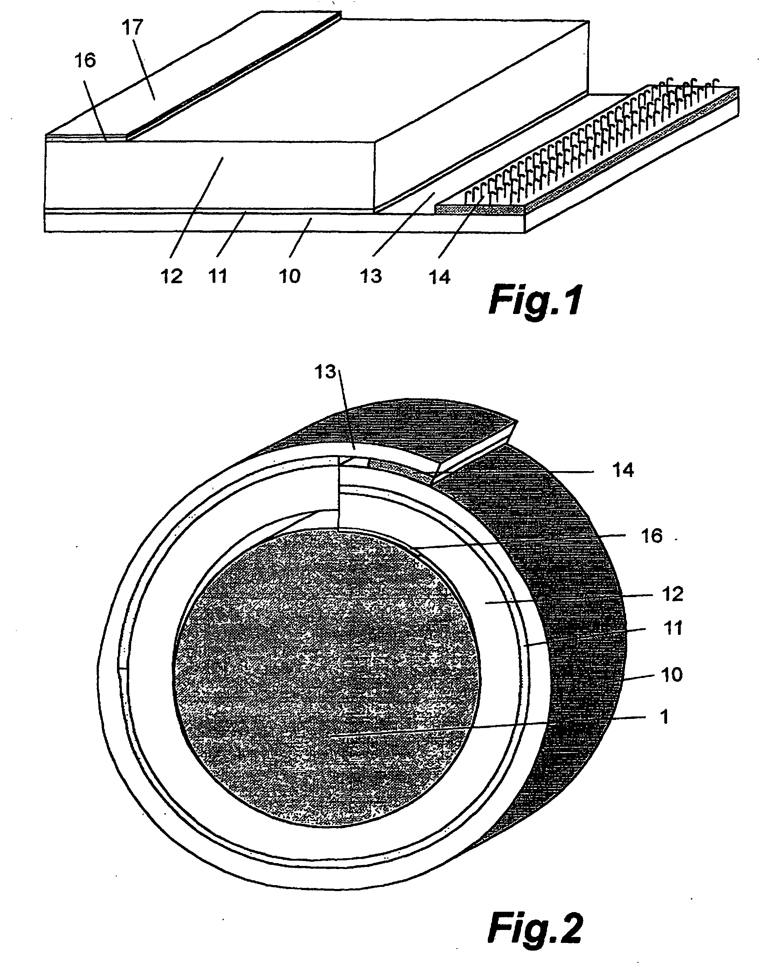

Fig. 1 zeigt einen PUR-Schaumstoffstreifen 12, dessen Breite auf den jeweiligen Anwendungsfall abgestimmt ist und dessen Länge beliebig sein kann. Auf die Außenseite des Schaumstoffstreifens 12 ist mittels einer Kaschierschicht 11 eine Außenschicht 10, vorzugsweise ein Flauschband in Form eines Spinnfaservlieses, vorzugsweise aus PES, PA oder einem anderen als "Flauschband" geeigneten Werkstoff, aufkaschiert. Die Außenschicht 10 ist breiter zugeschnitten als der Schaumstoffstreifen 12, so daß ein einseitiger Überschlag 13 entsteht.

An der dem Überschlag 13 entgegengesetzten Längskante des Schaumstoffstreifens 12 ist ein selbstklebender Klebstreifen 16 befestigt, der mit einem Schutzpapier 17 abgedeckt ist. Nach Abziehen des Schutzpapiers 17 kann der Klebstreifen 16 an dem zu schützenden Gegenstand festgeklebt werden, wodurch die Montage der Schutzummantelung erheblich vereinfacht und beschleunigt sowie ein seitliches Verrutschen der fertigen Schutzummantelung verhindert wird.

Auf der Innenseite des Überschlags 13 ist ein Hakenband 14 befestigt. Das Hakenband 14 und das die Außenschicht 10 bildende Flauschband bilden einen Klettverschluß.

Fig. 2 zeigt ausschnittsweise eine unter Verwendung der Materialbahn der Fig. 1 fertiggestellte Schutzummantelung. Der Schaumstoffstreifen 12 ist mit Hilfe des Klebstreifens 16 an der Außenseite eines Kabelbaums 1 angeklebt. Der Schaumstoffstreifen 12 umhüllt den Kabelbaum 1 über seinen ganzen Umfang. Das Hakenband 14 ist mit dem Flauschband 10 verhakt, die Schutzummantelung ist geschlossen. Dieser Verschluß ist flexibel und dauerhaft. Bei Bedarf läßt er sich jederzeit wieder öffnen und schließen.

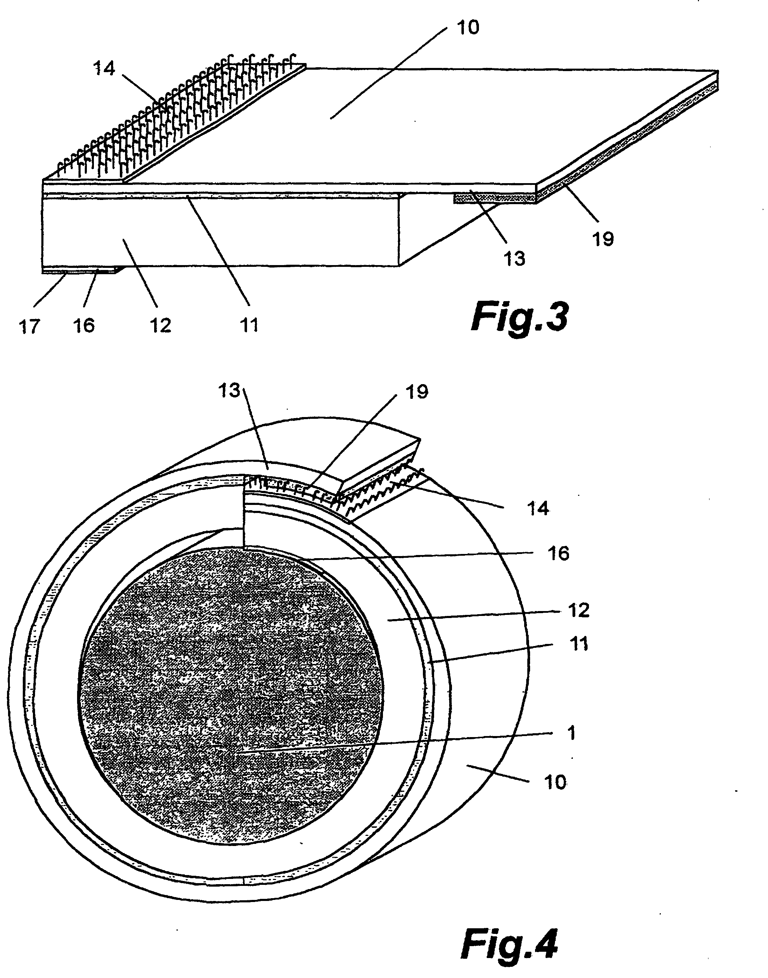

Fig. 3 zeigt eine weitere Materialbahn zur Herstellung einer Schutzummantelung. Auf der Außenseite des Schaumstoffstreifens 12 ist mit Hilfe der Kaschierschicht 11 eine glatte Außenschicht 10, vorzugsweise wieder das Spinnfaservlies, aufkaschiert. Die Außenschicht 10 ist wieder breiter zugeschnitten als der Schaumstoffstreifen 12, so daß der einseitige Überschlag 13 entsteht. Auf der Innenseite des Überschlags 13 ist ein Flauschband 19 befestigt.

Der selbstklebende, mit einem Schutzpapier 17 abgedeckte Klebstreifen 16 ist auf dem Schaumstoffstreifen 12 befestigt, und zwar an der dem Flauschband 19 gegenüberliegenden Längskante der Schutzummantelung.

An derselben Längskante der Schutzummantelung umfaßt die Außenschicht 10 das Hakenband 14. Die das Hakenband 14 umfassende Außenschicht und Flauschband 19 bilden den Klettverschluß.

Fig. 4 zeigt ausschnittsweise eine unter Verwendung der Materialbahn der Fig. 3 fertiggestellte Schutzummantelung. Der Schaumstoffstreifen 12 ist mit Hilfe des Klebstreifens 16 an der Außenseite des Kabelbaums 1 angeklebt. Das Hakenband 14 ist mit dem Flauschband 19 verhakt. Die Schutzummantelung ist geschlossen. Dieser Verschluß läßt sich bei Bedarf jederzeit wieder öffnen und schließen. Die Außenseite der Schutzummantelung ist völlig glatt.

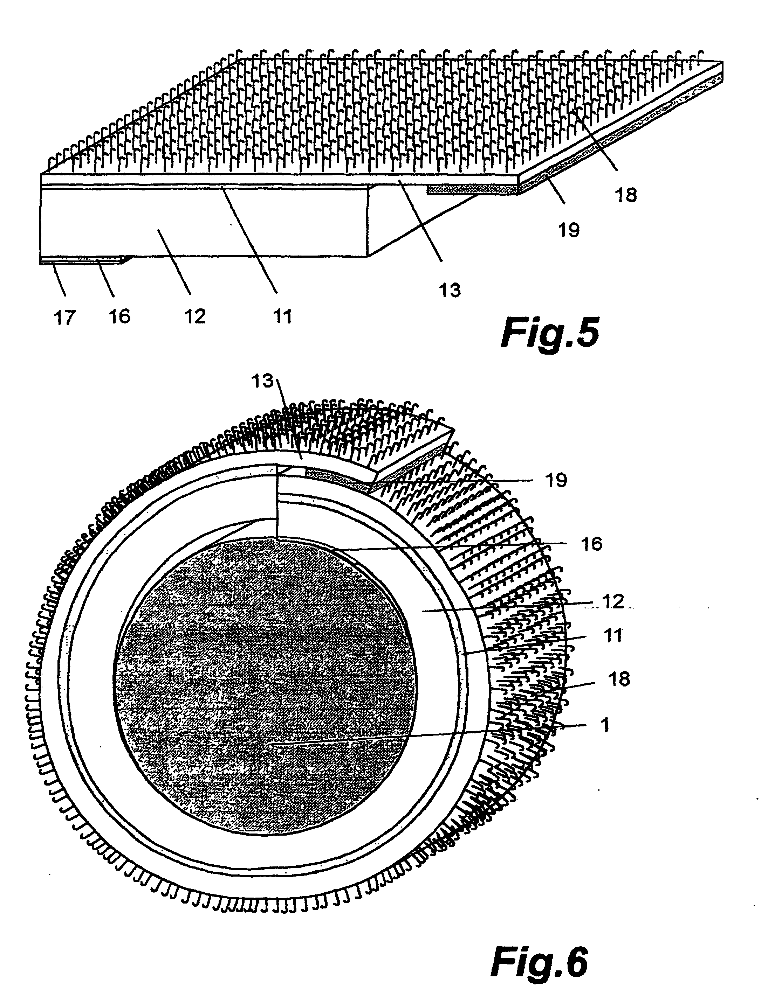

Fig. 5 zeigt eine dritte Materialbahn zur Herstellung einer Schutzummantelung. Auf der Außenseite des Schaumstoffstreifens 12 ist mit Hilfe der Kaschierschicht 11 ein Hakenband 18 als Außenschicht aufkaschiert. Die Außenschicht 18 ist wieder breiter als der Schaumstoffstreifen 12, so daß der einseitige Überschlag 13 entsteht. Auf der Innenseite des Überschlags 13 ist das Flauschband 19 befestigt. Hakenband 18 und Flauschband 19 bilden den Klettverschluß.

Fig. 6 zeigt ausschnittsweise eine unter Verwendung der Materialbahn der Fig. 5 fertiggestellte Schutzummantelung. Der Schaumstoffstreifen 12 ist mit Hilfe des Klebstreifens 16 an der Außenseite des Kabelbaums 1 angeklebt. Das Hakenband 18 ist mit dem Flauschband 19 verhakt. Die Schutzummantelung ist geschlossen. Dieser Verschluß läßt sich bei Bedarf jederzeit wieder öffnen und schließen. Die Haken des Hakenbandes 18 wirken schwingungs- und geräuschdämpfend, sie sind ausreichend abriebfest und ermöglichen die Fixierung des ummantelten Gegenstandes 1 an einfachen und preiswerten Flauschbändem, die in den Maschinen, Anlagen oder Fahrzeugen angebracht werden.

## Patentansprüche

1. Schutzummantelung für Kabel, Leitungen, Litzen, Hüllrohre und dergleichen langgestreckte, bewegliche Gegenstände, die in rotierenden bzw. vibrierenden Maschinen, Anlagen oder Fahrzeugen verlegt werden, insbesondere für Kabelbäume (1) in Kraftfahrzeugen, in Waschmaschinen, in Kompressoren usw., umfassend
- eine Außenschicht (10, 18),
- eine Innenschicht (12) aus Schaumstoff,
- einen Überschlag (13) der Außenschicht (10, 18) entlang der einen Längskante der Schutzummantelung,
- einen Verschlußstreifen (14, 19) auf der Innenseite des Überschlags (13),
- und einen Klebstreifen (16) auf der Innenschicht (12) entlang der anderen Längskante der Schutzummantelung,
**gekennzeichnet durch** das Merkmal:
- die Außenschicht (10, 18) und der Verschlußstreifen (14, 19) auf dem Überschlag (13) bilden einen Klettverschluß.

2. Schutzummantelung nach Anspruch 1, **gekennzeichnet durch** die Merkmale:
- der Verschlußstreifen (19) ist ein Flauschband,
- die Außenschicht (10) umfaßt ein Hakenband.

3. Schutzummantelung nach Anspruch 2, **gekennzeichnet durch** die Merkmale:
- die Außenschicht (10) umfaßt
-- eine abriebfeste Vliesschicht, insbesondere ein Spinnfaservlies,
-- und einen Verschlußstreifen (14) in Form des Hakenbandes.

4. Schutzummantelung nach Anspruch 2, **gekennzeichnet durch** das Merkmal:
- die gesamte Außenschicht ist als Hakenband (18) ausgebildet

5. Schutzummantelung nach Anspruch 1, **gekennzeichnet durch** die Merkmale:
- der Verschlußstreifen (14) ist ein Hakenband,
- die Außenschicht (10) umfaßt ein Flauschband.

6. Schutzummantelung nach Anspruch 5, **gekennzeichnet durch** die Merkmale:
- die Außenschicht (10) umfaßt
-- eine abriebfeste Vliesschicht, insbesondere ein Spinnfaservlies,
-- und einen Verschlußstreifen in Form des Flauschbandes.

7. Schutzummantelung nach Anspruch 2, **gekennzeichnet durch** das Merkmal:
- die gesamte Außenschicht ist als Flauschband (10) ausgebildet.

8. Schutzummantelung nach Anspruch 3 oder 6, **gekennzeichnet durch** das Merkmal:
- das Flauschband (11) ist bis zu dreimal breiter als das Hakenband (14) und umgekehrt.

9. Schutzummantelung nach einem der Ansprüche 1 bis 8, **gekennzeichnet durch** das Merkmal:
- zwischen Innenschicht (12) und Außenschicht (10, 18) befindet sich eine Kaschierschicht (11).

10. Schutzummantelung nach einem der Ansprüche 1 bis 9, **gekennzeichnet durch** das Merkmal:
- die Außenschicht (10) umfaßt auch ein Gewirke.

11. Schutzummantelung nach einem der Ansprüche 1 bis 10, **gekennzeichnet durch** das Merkmal:
- Gewirke bzw. Vlies (10) und/oder Flauschband (19) bestehen wenigstens teilweise aus Polyester (PES) bzw. Polyamid (PA).

12. Schutzummantelung nach einem der Ansprüche 1 bis 11, **gekennzeichnet durch** das Merkmal:
- Gewirke bzw. Vlies (10) und/oder Flauschband (19) bestehen wenigstens teilweise aus temperaturbeständigen textilen oder textilartigen Fasern, nämlich
-- Glasfasern
-- Keramikfasern oder
-- Aramidfasem.

13. Schutzummantelung nach einem der Ansprüche 1 bis 12, **gekennzeichnet durch** das Merkmal:
- die Innenschicht (12) besteht aus PUR-Weichschaum, PE-Schaum oder einem Zellkautschuk.

## Claims

1. A protective sheathing for cables, leads, strands, encasing tubes and similar elongate mobile articles which are installed in rotating or vibrating machines, installations or vehicles, in particular for cable harnesses (1) in motor vehicles, in washing machines, in compressors etc., comprising
- an outer layer (10,18),
- an inner layer (12) of foamed plastic,
- an overlap (13) of the outer layer (10,18) along one longitudinal edge of the protective sheathing,
- a fastening strip (14,19) on the inside of the overlap (13),
- and an adhesive strip (16) on the inner layer (12) along the other longitudinal edge of the protective sheathing, **characterised by** the feature:
- the outer layer (10,18) and the fastening strip (14,19) form a hook and loop-type closure on the overlap (13).

2. A protective sheathing according to Claim 1, **characterised by** the features:
- the fastening strip (19) is a fleece band,
- the outer layer (10) comprises a hook band.

3. A protective sheathing according to Claim 2, **characterised by** the features:
- the outer layer (10) comprises
- a wear-resistant non-woven fabric layer, in particular a staple fibre non-woven fabric,
- and a fastening strip (14) in the form of a hook band.

4. A protective sheathing according to Claim 2, **characterised by** the feature:
- the entire outer layer is in the form of a hook band (18).

5. A protective sheathing according to Claim 1, **characterised by** the features:
- the fastening strip (14) is a hook band,
- the outer layer (10) comprises a fleece band.

6. A protective sheathing according to Claim 5, **characterised by** the features:
- the outer layer (10) comprises
- a wear-resistant non-woven fabric layer, in particular a staple fibre non-woven fabric,
- and a fastening strip in the form of a fleece band.

7. A protective sheathing according to Claim 2, **characterised by** the feature:
- the entire outer layer is in the form of a fleece band (10).

8. A protective sheathing according to Claim 3 or 5, **characterised by** the feature:
- the fleece band (11) is up to three times wider than the hook band (14) and vice versa.

9. A protective sheathing according to any one of Claims 1 to 8, **characterised by** the feature:
- a lining layer (11) is disposed between the inner layer (12) and the outer layer (10,18).

10. A protective sheathing according to any one of Claims 1 to 9, **characterised by** the feature:
- the outer layer (10) also comprises a knitted fabric.

11. A protective sheathing according to any one of Claims 1 to 10, **characterised by** the feature:
- the knitted fabric or non-woven fabric (10) and/or the fleece band (19) consist at least partly of polyester (PES) or polyamide (PA).

12. A protective sheathing according to any one of Claims 1 to 11, **characterised by** the feature:
- the knitted fabric or non-woven fabric (10) and/or the fleece band (19) consist at least partly of temperature-resistant or textile-type fibres, namely
- glass fibres
- ceramic fibres or
- aramid fibres.

13. A protective sheathing according to any one of Claims 1 to 12, **characterised by** the feature:
- the inner layer (12) consists of PUR soft foam, PE foam or a cellular rubber.

## Revendications

1. Gaine de protection pour câbles, fils, faisceaux de câbles et autres objets similaires mobiles et de forme allongée, qui sont utilisés dans des machines, dispositifs ou véhicules subissant des rotations ou des vibrations, en particulier pour des harnais de câbles (1) dans des véhicules à moteur, dans des machines à laver, dans des compresseurs et autres, comprenant
- une couche externe (10, 18),
- une couche interne (12) en mousse,
- un recouvrement (13) de la couche externe (10, 18) le long d'une arête longitudinale de la gaine de protection,
- une bande de fermeture (14, 19) sur la face interne du recouvrement (13),
- et une bande adhésive (16) sur la couche interne (12) le long de l'autre arête longitudinale de la gaine de protection,
**caractérisée en ce que** :
- la couche externe (10, 18) et la bande de fermeture (14, 19) sur le recouvrement (13) forment un corps de fermeture de type Velcro.

2. Gaine de protection selon la revendication 1, **caractérisée en ce que** :
- la bande de fermeture (19) est une bande veloutée,
- la couche externe (10) comprend une bande à crochets.

3. Gaine de protection selon la revendication 2, **caractérisée en ce que**
- la couche externe (10) comprend :
- une couche d'un tissu non-tissé résistant au frottement, notamment un tissu non-tissé à fibre longue, et
- une bande de fermeture (14) constituée par la bande à crochets.

4. Gaine de protection selon la revendication 2, **caractérisée en ce que** :
- l'ensemble de la couche externe est réalisé comme une bande à crochets (18).

5. Gaine de protection selon la revendication 1, **caractérisée en ce que** :
- la bande de fermeture (14) est une bande à crochets,
- la couche externe (10) comprend une bande veloutée.

6. Gaine de protection selon la revendication 5, **caractérisée en ce que** :
- la couche externe (10) comprend
- une couche d'un tissu non-tissé résistant au frottement, notamment un tissu non-tissé à fibre longue, et
- une bande de fermeture constituée par la bande veloutée.

7. Gaine de protection selon la revendication 2, **caractérisée en ce que** :
- l'ensemble de la couche externe est réalisé comme une bande veloutée (10).

8. Gaine de protection selon la revendication 3 ou 6, **caractérisée en ce que** :
- la bande veloutée (11) est jusqu'à trois fois plus large que la bande à crochets (14) et elle est inversée.

9. Gaine de protection selon l'une des revendications 1 à 8, **caractérisée en ce que** :
- une couche formant une garniture (11) est disposée entre la couche interne (12) et la couche externe (10, 18).

10. Gaine de protection selon l'une des revendications 1 à 9, **caractérisée en ce que** :
- la couche externe (10) comprend également un tricot.

11. Gaine de protection selon l'une des revendications 1 à 10, **caractérisée en ce que** :
- le tricot ou le tissu non-tissé (10) et/ou la bande veloutée (19) sont constitués au moins en partie de polyester (PES) ou de polyamide (PA).

12. Gaine de protection selon l'une des revendications 1 à 11, **caractérisée en ce que** :
- le tricot ou le tissu non-tissé (10) et/ou la bande veloutée (19) sont constitués au moins en partie de fibres textiles ou présentant des caractéristiques similaires thermiquement stables, notamment,
- des fibres de verre
- des fibres de céramique ou
- des fibres d'aramide.

13. Gaine de protection selon l'une des revendications 1 à 12, **caractérisée en ce que** :
- la couche interne (12) est composée d'une mousse molle de polyuréthane (PUR), d'une mousse de polyéthylène (PE) ou d'un caoutchouc cellulaire.
